# EUROPEAN PATENT APPLICATION

(11) **EP 4 622 157 A1**
(43) Date of publication of application: **24.09.2025**
(21) Application number: 23902595.0
(22) Date of filing: 08.12.2023
(51) Int. Cl.: H04L 5/00

(54) **CELL ACTIVATION METHOD AND COMMUNICATION APPARATUS**

(30) Priority: 12.12.2022 CN 202211589773
(71) Applicant: Huawei Technologies Co., Ltd., Shenzhen, Guangdong 518129 (CN)
(72) Inventor: HUANG, Xiuxuan, Shenzhen, Guangdong 518129 (CN); LI, Xinxian, Shenzhen, Guangdong 518129 (CN); ZHAI, Bangzhao, Shenzhen, Guangdong 518129 (CN); PENG, Jinlin, Shenzhen, Guangdong 518129 (CN)
(74) Representative: Thun, Clemens
(86) International application number: PCT/CN2023/137381
(87) International publication number: WO 2024/125399

(57) **Abstract**

This application provides a cell activation method and a communication apparatus, may be applied to a scenario such as carrier aggregation, and is particularly applicable to activation of a high-frequency secondary cell. The method includes: receiving first configuration information from a network device via a first cell, where the first configuration information indicates N time-frequency resources that are in one-to-one correspondence with N temporary reference signals TRSs; receiving K of the N TRSs on K of the N time-frequency resources; and further activating a second cell based on the K TRSs. Compared with activating a cell by using a physical broadcast channel block SSB, configuring a dedicated TRS for a terminal device can reduce a delay of activating a secondary cell.

## Description

This application claims priority to Chinese Patent Application No. 202211589773.9, filed with the China National Intellectual Property Administration on December 12, 2022 and entitled "CELL ACTIVATION METHOD AND COMMUNICATION APPARATUS", which is incorporated herein by reference in its entirety.

### TECHNICAL FIELD

This application relates to the field of communication technologies, and more specifically, to a cell activation method and a communication apparatus.

### BACKGROUND

Two or more component carriers (component carrier, CC) may be aggregated by using carrier aggregation (carrier aggregation, CA) to support a larger transmission bandwidth. In this way, requirements for increasing a peak rate of a single user and a system capacity can be met. When the CA technology is applied, a terminal device may communicate with a primary cell (primary cell, PCell) and a secondary cell (secondary cell, SCell) at the same time. The SCell can perform data transmission only when the SCell is in an activation state.

Currently, for cell activation, time-frequency synchronization between a network device and the terminal device needs to be first completed via a synchronization signal and physical broadcast channel block (synchronization signal and physical broadcast channel block, SSB). To reduce network power consumption and system overheads, a long SSB transmission periodicity is usually configured. However, a long SSB transmission periodicity causes a long cell activation delay. This affects user experience, and increases power consumption of the terminal device.

### SUMMARY

This application provides a cell activation method and a communication apparatus, to reduce a delay of activating a secondary cell.

According to a first aspect, a cell activation method is provided. The method is performed by a terminal device or a module used in a terminal device, and includes: receiving first configuration information from a network device via a first cell, where the first configuration information indicates N time-frequency resources that are in one-to-one correspondence with N temporary reference signals TRSs, and the N time-frequency resources are respectively used for carrying the N TRSs; receiving K of the N TRSs on K of the N time-frequency resources, where K and N are positive integers, and K≤N; and activating a second cell based on the K TRSs.

In some implementations of the first aspect, the first configuration information is carried in radio resource control RRC signaling.

According to the foregoing technical solutions, in this application, the TRS can be transmitted on the dedicated time-frequency resource independently configured for the terminal device, to activate the cell. This can implement personalized configuration of a parameter such as a periodicity and/or transmission time of the TRS. In comparison with a manner of activating a cell via a common SSB, a delay of activating the secondary cell can be reduced, so that the terminal device quickly activates the cell, user experience is improved, and power consumption of the terminal device is reduced.

In some implementations of the first aspect, a communication connection is established between the first cell and the terminal device. For example, the first cell may be a primary cell of the terminal device.

In an implementation, the first cell is a low-frequency primary cell. For example, a frequency range of the first cell may be a frequency range 1 (frequency range 1, FR1). The second cell may be a secondary cell of the terminal device.

In an implementation, the second cell is a high-frequency secondary cell. For example, a frequency range of the second cell may be a frequency range 2 (frequency range 1, FR 2).

Based on the foregoing settings, the solutions in this application can be effectively applied to an activation process of a high-frequency cell.

In some implementations of the first aspect, each of the N TRSs includes a primary synchronization signal PSS and/or a secondary synchronization signal SSS.

In a possible implementation, a first symbol used for carrying the PSS and a second symbol used for carrying the SSS are in a same slot. The first symbol and the second symbol may be two consecutive symbols.

In some implementations of the first aspect, in this application, the TRS includes the PSS, the SSS, and a physical broadcast channel (physical broadcast channel, PBCH).

In some implementations of the first aspect, a largest time gap between any two time-frequency resources that are adjacent in time domain in the N time-frequency resources is a first time gap, a largest time gap between any two time-frequency resources that are adjacent in time domain in a plurality of time-frequency resources used for carrying an SSB is a second time gap, and the first time gap is shorter than the second time gap.

In some implementations of the first aspect, when the N time-frequency resources are configured, a value of N is less than or equal to a maximum quantity of beams supported by the second cell.

In some implementations of the first aspect, first activation information from the network device is received, where the first activation information may indicate to activate the second cell. The first activation information may be medium access control-control element (medium access control-control element, MAC CE) signaling.

In some implementations of the first aspect, first indication information from the network device is received, where the first indication information indicates the K of the N TRSs. The N TRSs may be understood as a TRS pool that is configured by the network device for the terminal device and that are used for selection, and the K TRSs may be understood as TRSs that the network device indicates, in a process of activating the second cell, the terminal device to actually use. In a possible implementation, the first indication information and the first activation information may be carried in same signaling.

In some implementations of the first aspect, there is a third time gap between a time-frequency resource used for carrying a TRS with a foremost time domain position in the K TRSs and a time-frequency resource used for carrying the first activation information, and the third time gap is configured by using signaling or predefined in a protocol. In a possible case, duration from starting of receiving the first activation information to completion of receiving a TRS with a rearmost time domain position in the K TRSs is shorter than a first threshold. The first threshold is time from starting of receiving second activation information to completion of receiving an SSB with a rearmost time domain position in K SSBs, and the second activation information is activation information received when the second cell is activated via the K SSBs.

In other words, first duration is shorter than second duration, the first duration is the duration from starting of receiving the first activation information to completion of receiving a TRS with a rearmost time domain position in the K TRSs, and the second duration is duration from starting of receiving second activation information to completion of receiving an SSB with a rearmost time domain position in the N SSBs. The N SSBs are used for activating the second cell, and the first activation information and the second activation information indicate to activate the second cell.

In addition, the K TRSs belong to one of a plurality of TRS burst sets, there is a fourth time gap between two TRS burst sets that are adjacent in time domain, the fourth time gap is shorter than a fifth time gap, and the fifth time gap is a time gap between two SSB burst sets that are adjacent in time domain in a plurality of SSB burst sets.

Therefore, compared with activating a cell via an SSB, in this application, activating a cell by using a TRS with shorter transmission duration can reduce an activation delay. In this way, user experience is improved, and power consumption of the terminal device is reduced.

According to a second aspect, a cell activation method is provided. The method is performed by a network device or a module used in a network device, and includes: sending first configuration information via a first cell, where the first configuration information indicates N time-frequency resources that are in one-to-one correspondence with N temporary reference signals TRSs, and the N time-frequency resources are respectively used for carrying the N TRSs; and sending K of the N TRSs on K of the N time-frequency resources, where the K TRSs are used for activating a second cell, K and N are positive integers, and K≤N.

In some implementations of the second aspect, the first cell is a primary cell of a terminal device, and the second cell is a secondary cell of the terminal device.

In some implementations of the second aspect, the first configuration information is carried in radio resource control RRC signaling. In other words, the N time-frequency resources are dedicated resources configured by the network device for the terminal device, and different terminal devices in the first cell receive the N TRSs by using corresponding different time-frequency resources.

According to the foregoing technical solutions, in this application, the TRS can be transmitted on the dedicated time-frequency resource, to activate the cell. This can reduce a delay of activating the secondary cell, so that the terminal device quickly activates the cell, user experience is improved, and power consumption of the terminal device is reduced.

In some implementations of the second aspect, each of the N TRSs includes a primary synchronization signal PSS and a secondary synchronization signal SSS, and a first symbol used for carrying the PSS and a second symbol used for carrying the SSS are in a same slot. Further, the first symbol and the second symbol are two consecutive symbols.

In some implementations of the second aspect, in this application, the TRS includes the PSS and the SSS, and further includes a PBCH.

In some implementations of the second aspect, the TRS in this application may include only the PSS, or include only the SSS.

In some implementations of the second aspect, a largest time gap between any two time-frequency resources that are adjacent in time domain in the N time-frequency resources is a first time gap, a largest time gap between any two time-frequency resources that are adjacent in time domain in a plurality of time-frequency resources used for carrying an SSB is a second time gap, and the first time gap is shorter than the second time gap.

In some implementations of the second aspect, when the N time-frequency resources are configured, a value of N is less than or equal to a maximum quantity of beams supported by the second cell.

In some implementations of the second aspect, first activation information from the network device is received, where the first activation information may indicate to activate the second cell.

In some implementations of the second aspect, first indication information is sent, where the first indication information indicates the K of the N TRSs. In a possible implementation, the first indication information and the first activation information may be carried in same signaling, for example, both may be carried in MAC CE signaling.

In some implementations of the second aspect, there is a third time gap between a time-frequency resource used for carrying a TRS with a foremost time domain position in the K TRSs and a time-frequency resource used for carrying the first activation information, and the third time gap is configured by using signaling or predefined in a protocol. Further, duration from starting of sending the first activation information to completion of sending a TRS with a rearmost time domain position in the K TRSs is shorter than a first threshold. The first threshold is time from starting of sending second activation information to completion of sending an SSB with a rearmost time domain position in K SSBs, and the second activation information is activation information sent when the second cell is activated via the K SSBs.

The TRS is configured to be sent in a period of time shorter than the first threshold, so that an activation delay can be reduced. In this way, user experience is improved, and power consumption of the terminal device is reduced.

In some implementations of the second aspect, the K TRSs belong to one of a plurality of TRS burst sets, there is a fourth time gap between two TRS burst sets that are adjacent in time domain, the fourth time gap is shorter than a fifth time gap, and the fifth time gap is a time gap between two SSB burst sets that are adjacent in time domain in a plurality of SSB burst sets. Because the fourth time gap in this application is shorter than the fifth time gap, a TRS periodicity configured in this application may be shorter than an SSB periodicity.

According to the foregoing solutions, a short TRS transmission periodicity may be configured for a specific terminal device, to reduce time for which the terminal device waits to receive a TRS in an activation process is reduced. This reduces a delay in the activation procedure and helps improve user experience.

According to a third aspect, a communication apparatus is provided, including a processor, configured to execute a computer program stored in a memory, to enable the communication apparatus to perform the method according to the first aspect or the second aspect.

According to a fourth aspect, a computer-readable storage medium is provided. The storage medium stores a computer program or instructions. When the computer program or the instructions are executed by a communication apparatus, the communication apparatus is enabled to perform the method provided in the first aspect or the second aspect.

According to a fifth aspect, a chip is provided, including a processor, configured to execute a computer program stored in a memory, to enable a communication apparatus in which a chip system is installed to perform the method according to the first aspect or the second aspect.

According to a sixth aspect, a computer program is provided. When the computer program is executed by a communication apparatus, the method according to the first aspect or the second aspect is implemented.

### BRIEF DESCRIPTION OF DRAWINGS

FIG. 1 is a diagram of a communication system applicable to an embodiment of this application;
FIG. 2 is a diagram of an application scenario applicable to an embodiment of this application;
FIG. 3 is a diagram of a beam sweeping process;
FIG. 4 is a schematic interaction flowchart applicable to an embodiment of this application;
FIG. 5 shows an example of a TRS burst pattern according to an embodiment of this application;
FIG. 6 shows another example of a TRS burst according to an embodiment of this application;
FIG. 7 shows still another example of a TRS burst pattern according to an embodiment of this application;
FIG. 8 shows still another example of a TRS burst pattern according to an embodiment of this application;
FIG. 9 shows a TRS sending method according to an embodiment of this application;
FIG. 10 shows another TRS sending method according to an embodiment of this application;
FIG. 11 is a diagram of a plurality of TRS burst sets;
FIG. 12 is a diagram of a plurality of SSB burst sets;
FIG. 13 is a diagram of a communication apparatus according to an embodiment of this application; and
FIG. 14 is a diagram of another communication apparatus according to an embodiment of this application.

### DESCRIPTION OF EMBODIMENTS

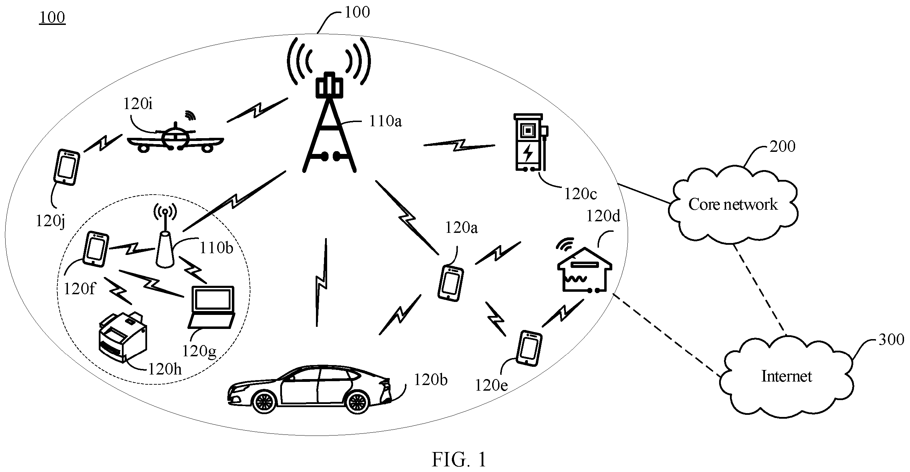

FIG. 1 is a diagram of an architecture of a communication system 100 applicable to an embodiment of this application. As shown in FIG. 1, the communication system includes a radio access network 100 and a core network 200. Optionally, the communication system 100 may further include an internet 300. The radio access network 100 may include at least one radio access network device (for example, 110a and 110b in FIG. 1), and may further include at least one terminal device (for example, 120a to 120j in FIG. 1). The terminal device is connected to the radio access network device in a wireless manner, and the radio access network device is connected to a core network in a wireless or wired manner. The core network device and the radio access network device may be independent and different physical devices, or functions of the core network device and logical functions of the radio access network device are integrated into a same physical device, or some functions of the core network device and some functions of the radio access network device are integrated into one physical device. A wired or wireless manner may be used for connection between terminals and between radio access network devices.

It should be understood that FIG. 1 is only a diagram. The communication system may further include other network devices, for example, may further include a wireless relay device and a wireless backhaul device, which are not shown in FIG. 1.

The radio access network device is access device for the terminal device to access the communication system in a wireless manner, and may also be referred to as a network device. The network device may be a base station (base station), an evolved NodeB (evolved NodeB, eNodeB), a transmission reception point (transmission reception point, TRP), a next generation NodeB (next generation NodeB, gNB) in a 5G mobile communication system, a next generation NodeB in a 6G mobile communication system, a base station in a future mobile communication system, an access node in a Wi-Fi system, or the like; or may be a module or a unit that implements some functions of the base station, for example, may be a central unit (central unit, CU), or may be a distributed unit (distributed unit, DU). The CU herein implements functions of a radio resource control protocol and a packet data convergence protocol (packet data convergence protocol, PDCP) of the base station, and may further implement functions of a service data adaptation protocol (service data adaptation protocol, SDAP). The DU completes functions of a radio link control layer and a medium access control (medium access control, MAC) layer of the base station, and may further complete some or all of physical layer functions. For a detailed description of the foregoing protocol layers, reference may be made to technical specifications related to the 3rd generation partnership project (3rd generation partnership project, 3GPP). For example, the CU is responsible for processing a non-real-time protocol and service, to implement functions of a radio resource control (radio resource control, RRC) layer and a PDCP layer. The DU is responsible for processing a physical layer protocol and a real-time service, and implements functions of a radio link control (radio link control, RLC) layer, a MAC layer, and a physical (physical, PHY) layer. For example, the base station may further include an active antenna unit (active antenna unit, AAU). The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU.

The network device may be a macro base station (for example, 110a in FIG. 1), may be a micro base station or an indoor base station (for example, 110b in FIG. 1), or may be a relay node, a donor node, or the like. A specific technology and a specific device form that are used by the network device are not limited in embodiments of this application. For ease of description, the network device is used as an abbreviation of the radio access network device, and the base station is used as an example of the radio access network device.

A terminal is a device having a wireless transceiver function, and may send a signal to the base station, or receive a signal from the base station. The terminal may also be referred to as a terminal device, user equipment (user equipment, UE), a mobile station, a mobile terminal, or the like. The terminal may be widely used in various scenarios, for example, a device-to-device (device-to-device, D2D) scenario, a vehicle-to-everything (vehicle to everything, V2X) communication scenario, a machine-type communication (machine-type communication, MTC) scenario, an internet of things (internet of things, IoT) scenario, a virtual reality scenario, an augmented reality scenario, an industrial control scenario, an autonomous driving scenario, a telemedicine scenario, a smart grid scenario, a smart furniture scenario, a smart office scenario, a smart wearable scenario, a smart transportation scenario, and a smart city scenario. The terminal may be a mobile phone, a tablet computer, a computer with a wireless transceiver function, a wearable device, a vehicle, an airplane, a ship, a robot, a robotic arm, a smart home device, or the like. A specific technology and a specific device form that are used by the terminal are not limited in embodiments of this application.

The base station and the terminal may be fixed or movable. The base station and the terminal may be deployed on land, including an indoor or outdoor device, a hand-held device, or a vehicle-mounted device, or may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for a terminal 120j accessing the radio access network 100 through 120i, a terminal 120i is a base station. However, for a base station 110a, 120i is a terminal. In other words, communication between 110a and 120i is performed based on a wireless air interface protocol. Certainly, communication between 110a and 120i may alternatively be performed based on an interface protocol between base stations. In this case, for 110a, 120i is also a base station. Therefore, both the base station and the terminal may be collectively referred to as a communication apparatus, 110a and 110b in FIG. 1 may be referred to as a communication apparatus having a base station function, and 120a to 120j in FIG. 1 may be referred to as a communication apparatus having a terminal function.

Communication between the base station and the terminal, between the base station and the base station, or between the terminal and the terminal may be performed by using a licensed spectrum, or may be performed by using an unlicensed spectrum, or may be performed by using both the licensed spectrum and the unlicensed spectrum. Communication may be performed by using a spectrum below 6 gigahertzes (gigahertz, GHz), or may be performed by using a spectrum above 6 GHz, or may be performed by using both the spectrum below 6 GHz and the spectrum above 6 GHz. A spectrum resource used for wireless communication is not limited in embodiments of this application.

In embodiments of this application, a function of the base station may be performed by a module (such as a chip) in the base station, or may be performed by a control subsystem including a base station function. The control subsystem including the base station function herein may be a control center in the foregoing application scenarios, such as a smart grid, industrial control, smart transportation, and a smart city. A function of the terminal may be performed by a module (for example, a chip or a modem) in the terminal, or may be performed by an apparatus including a terminal function.

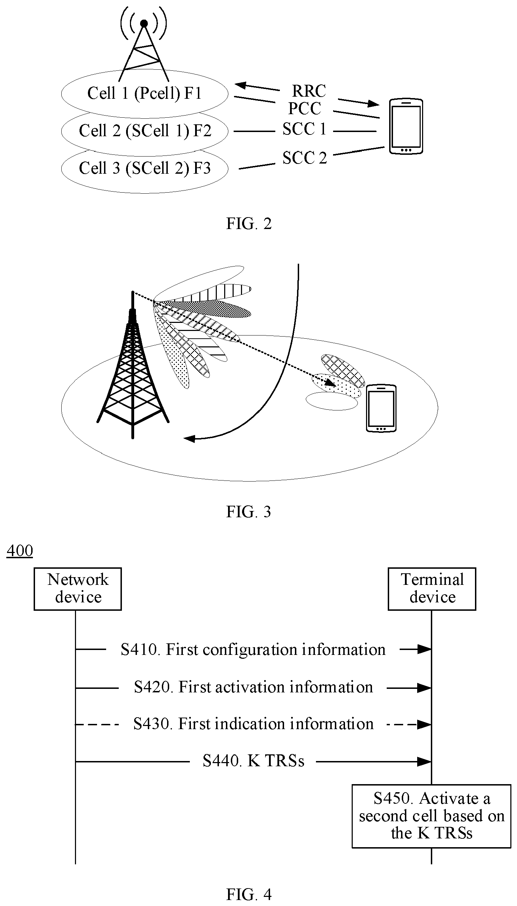

FIG. 2 shows an application scenario applicable to an embodiment of this application. When a CA technology is applied, a cell 1 may be a PCell, a terminal device communicates with the PCell via a primary carrier (primary carrier component, PCC), an operating frequency (or a center frequency of the PCC) of the cell 1 is F1, and F1 may be a low frequency, in other words, F1 belongs to a low frequency range. An RRC connection is established between the PCell and the terminal device, and the PCell is a cell in which the terminal device performs initial connection establishment, or a cell in which the terminal device performs RRC connection reestablishment, or a PCell specified in a handover process. A cell 2 and a cell 3 are two different SCells, and are configured to provide additional radio resources. There is no RRC connection between the SCell and the terminal device. After an initial security activation procedure, the SCell is added/modified/released by using an RRC connection reconfiguration message. The terminal device communicates with the cell 2 via a secondary carrier (secondary carrier component, SCC) 1. A frequency of the cell 2 (in other words, a center frequency of the SCC 1) is F2. The terminal device communicates with the cell 2 via an SCC 2. A frequency of the cell 3 (in other words, a center frequency of the SCC 2) is F3. F2 and F3 are high frequencies, in other words, F2 and F3 belong to a high frequency range.

FIG. 3 is a diagram of a beam sweeping process. A network device may send signals to a terminal device by using a plurality of transmit beams, and the terminal device may receive the signals from the network device by using a plurality of receive beams. A beam management process may be used for determining beams used by the network device and the terminal device to perform signal receiving and sending. To determine a specific transmit beam in the plurality of transmit beams that is used by the network device to send the signal to the terminal device, the network device may traverse and use each of the plurality of transmit beams to send a reference signal (reference signal, RS) to the terminal device, and the terminal device selects a receive beam for RS measurement reporting, so that the network device can determine the transmit beam used to send the signal to the terminal device. Then, the network device fixes the transmit beam, and the terminal device may traverse and use each of the plurality of receive beams to receive the RS from the network device. Based on a measurement result of the RS, the terminal device may determine a receive beam used to receive the signal from the network device. The RS may be a TRS in this application. It may be understood that, for signal receiving and sending, a receive beam and a transmit beam are usually a same beam. In other words, a transmit beam of the network device is also a receive beam for the network device to receive a signal, and a receive beam of the terminal device is also a transmit beam for the terminal device to send a signal.

A high-frequency SCell activation procedure includes cell search and layer 1 (Layer 1, L1) beam measurement. The cell search includes time and frequency synchronization between the terminal device and the cell. An SSB-based SCell activation procedure is used as an example. The terminal device establishes communication with a low-frequency PCell, and a high-frequency SCell is activated as required. When an inter-frequency cell is activated, in addition to performing cell search, the terminal device further needs to perform two times of automatic gain control (automatic gain control, AGC) adjustment and one time of L1 measurement. Therefore, a total of four times of SSB measurement need to be performed in an entire process. In a process of cell search, AGC, or L1 measurement, the network device traverses all transmit beams to send a cell-specific SSB (Cell-specific SSB), and the terminal device fixes a receive beam for receiving. Considering that the terminal device currently has receive beams in a maximum of eight directions, one time of SSB measurement includes eight SSB periodicities in total. However, a periodicity of the cell-specific SSB configured by the network device is usually long to reduce system overheads and power consumption of the network device. Currently, one SSB periodicity is usually configured as 20 ms. In this scenario, a total inter-frequency SCell activation delay is about 4*8 times of beam sweeping*SSB periodicity=4*8*20 ms=640 ms. It can be learned that activation procedures such as AGC, time-frequency synchronization, and beam management in different beam directions performed based on the cell-specific SSB result in long cell activation time, user experience is affected, and power consumption of the terminal device is high.

In view of this, embodiments of this application provide a quick cell activation method, so that a terminal device can quickly activate a cell based on a service requirement, thereby improving user experience and reducing power consumption of the terminal device. The method in embodiments of this application is particularly applicable to activation of a high-frequency SCell. Specifically, embodiments of this application provide a temporary reference signal (temporary reference signal, TRS), and the TRS is applied to a cell activation procedure.

It needs to be noted that an SSB (in other words, a time-frequency resource occupied by an SSB) may be referred to as an SSB burst (SSB burst), an SSB burst includes a PSS, an SSS, and a PBCH, and an SSB occupies four symbols in time domain. Correspondingly, a TRS (or a time-frequency resource occupied by a TRS) may be referred to as a TRS burst (TRS burst).

A TRS burst may include a primary synchronization signal (primary synchronization signal, PSS) and/or a secondary synchronization signal (secondary synchronization signal, SSS). When including only a PSS or an SSS, a TRS burst occupies one symbol in time domain. When including a PSS and an SSS, a TRS burst occupies two symbols in time domain. A TRS burst may alternatively include a PSS, an SSS, and a PBCH, and occupies four symbols in time domain.

Further, SSBs (in other words, SSB bursts) sent for completing one time of beam sweeping form an SSB burst set (SSB burst set). Correspondingly, a set of TRS bursts sent for completing one time of beam sweeping is referred to as a TRS burst set (TRS burst set). One time of beam sweeping may be a process of fixing a beam direction of a receiving end, traversing beams of a transmitting end, and determining an optimal transmit beam. Alternatively, one time of beam sweeping may be a process of fixing a beam direction of a transmitting end, traversing beams of a receiving end, and determining an optimal receive beam. Each TRS burst in a TRS burst set may correspond to one beam direction. A quantity of TRS bursts is configured, so that one TRS burst set can cover a plurality of beam directions, to complete one time of beam sweeping.

It should be understood that names in embodiments of this application are merely for ease of description and understanding, and are not to constitute any limitation on the scope of this application. A possibility that the foregoing signal and the signal set have other names in a 5G network and another future network is not excluded in this application.

The following describes in detail the technical solutions in this application with reference to accompanying drawings. FIG. 4 is a schematic flowchart of a cell activation method 400 according to an embodiment of this application. Specifically, FIG. 4 shows a process of activating a second cell for a terminal device via a first cell. A communication connection is established between the first cell and the terminal device. For example, the first cell may be a current serving cell of the terminal device, or the first cell is a cell currently accessed by the terminal device.

In a case, this embodiment of this application may be applied to a scenario in which a network device activates a secondary cell (that is, an example of the second cell) via a primary cell. In this case, the first cell may be a PCell of the terminal device. Further, the first cell may be a low-frequency PCell. For example, a carrier of the PCell is a carrier of FR1, and a frequency range is 410 MHz to 7125 MHz. The second cell may be a high-frequency SCell. For example, a carrier of the SCell is a carrier of FR2, and a frequency range is 24250 MHz to 52600 MHz. For more details about FR1 and FR2, refer to the 3GPP technical specification (technical specification, TS) 38.101-1 V17.7.0. It should be noted that the "low frequency" may be understood as a frequency range, and the "high frequency" may be understood as a frequency range. For example, any frequency in the "high frequency" may be higher than any frequency in the "low frequency". For another example, the "high frequency" overlaps the "low frequency", a frequency with a highest frequency in the "high frequency" is higher than a frequency with a highest frequency in the "low frequency", and a frequency with a lowest frequency in the "high frequency" is higher than a frequency with a lowest frequency in the "low frequency".

In another case, this embodiment of this application may be applied to a process in which the terminal device switches from a source cell to a target cell, to be specific, a process in which beam management for the target cell (that is, another example of the second cell) is configured for the terminal device via the source cell (that is, another example of the first cell).

It should be understood that the steps or operations shown in FIG. 4 are merely examples. Other operations or variations of the operations in FIG. 4 may also be performed in this embodiment of this application. In addition, the steps in FIG. 4 may be performed in a sequence different from a sequence shown in FIG. 4, and some operations in FIG. 4 may not need to be performed.

As shown in FIG. 4, the method 400 may include the following steps.

S410. A network device sends first configuration information via the first cell, and the terminal device receives the first configuration information. The first configuration information indicates N time-frequency resources that are in one-to-one correspondence with N TRSs, the N time-frequency resources are respectively used for carrying the N TRSs, and N is a positive integer.

That "the N time-frequency resources are respectively used for carrying the N TRSs" may be understood as: An n^{th} time-frequency resource in the N time-frequency resources is used for carrying an n^{th} TRS in the N TRSs, where n∈[1, N], and the n^{th} time-frequency resource corresponds to the n^{th} TRS.

The N TRSs are TRSs used for activating the second cell. In other words, the terminal device may perform beam sweeping by using some or all of the N TRSs (that is, K TRSs).

The terminal device can learn of, based on the first configuration information, the N time-frequency resources respectively used for carrying the N TRSs.

S440. The terminal device receives the K of the N TRSs on K of the N time-frequency resources, and performs beam sweeping based on the K TRSs, to complete activation of the second cell, where K is a positive integer, and K≤N.

"Receiving the K of the N TRSs on K of the N time-frequency resources" may be understood as receiving, on a k^{th} time-frequency resource in the K time-frequency resources based on the first configuration information, a TRS corresponding to the k^{th} time-frequency resource, where k∈[1, K].

When the second cell is a cell managed by the network device, the K TRSs are sent by the network device. In other words, in S440, the network device sends the K of the N TRSs on the K of the N time-frequency resources.

When the second cell is a cell managed by a network device (for example, a target network device the terminal device needs to switch to) other than the network device, the K TRSs are sent by the target network device.

The first configuration information is carried in RRC signaling. The RRC signaling is unicast signaling sent by the network device to the terminal device. Therefore, the first configuration information in the RRC signaling is configuration information dedicated to the terminal device. In other words, the N TRSs indicated by the first configuration information are TRSs dedicated to the terminal device. In other words, the N time-frequency resources indicated by the first configuration information are time-frequency resources dedicated to the terminal device. That is, different terminal devices in the first cell receive the N TRSs on different time-frequency resources. Therefore, the TRS in this application may be referred to as a UE-specific TRS (UE-specific TRS), or a TRS dedicated to the UE.

As shown above, this embodiment of this application provides a UE-specific TRS configuration manner. An SSB having a long periodicity is replaced, for performing a cell activation process, so that a cell activation delay can be reduced.

S450. The terminal device activates the second cell based on the received K TRSs. The TRS in this embodiment of this application may be used in processes such as beam sweeping, cell search, AGC, and L1 measurement in an activation procedure. In an implementation, after activation of the second cell is completed, the network device and the terminal device may further perform beam management via a CSI-RS.

The following describes in detail the first configuration information and content indicated by the first configuration information in this embodiment of this application.

In this embodiment of this application, the first configuration information indicates the N TRSs and the time-frequency resources respectively used for carrying the N TRSs.

The N TRSs are used for activating the second cell. For example, the N TRSs may correspond to N beams, in other words, each TRS is used for sweeping of a corresponding beam. In addition, angles (for example, tilt angles and/or downtilt angles) of the N beams are different, in other words, coverage areas of the N beams are different.

In an implementation, the first configuration information may include N information elements, the N information elements are in one-to-one correspondence with the N TRSs, and each information element includes information about a corresponding TRS. For example, for an information element #A, if a TRS corresponding to the information element #A is a TRS#A, the information element #A includes an identifier of the TRS#A, for example, a TRS resource identifier or a TRS resource index. In addition, the information element #A may further include information about a time-frequency resource #A used for carrying the TRS #A, for example, time domain position information and/or frequency domain position information of the time-frequency resource #A. In addition, the information element #A includes quasi co-location (quasi co-location, QCL) information of the TRS #A (in other words, a beam corresponding to the TRS #A), for example, a QCL source and a QCL type.

The first configuration information may indicate a start time domain position of a time-frequency resource with a foremost time domain position in the N time-frequency resources. The start time domain position may be an absolute position, or the start time domain position may be a relative position relative to a reference moment. For example, the reference moment may be a moment at which receiving of the first configuration information is completed, or the reference moment may be a moment at which receiving of activation information for the second cell (that is, first activation information) is completed. In addition, the relative position of the start time domain position relative to the reference moment may include an offset (offset) of the start time domain position relative to the reference moment, and the offset may be measured in slots (slot).

For another example, there is a time gap between two time-frequency resources that are adjacent in time domain in the N time-frequency resources. In this case, the first configuration information may further indicate the time gap (gap). It should be noted that gaps between any two adjacent time-frequency resources in the N time-frequency resources may be the same. In this case, the N time-frequency resources are periodically distributed. Alternatively, there may be at least two different gaps in a plurality of gaps between the N time-frequency resources. This is not particularly limited in this application.

The N TRSs may correspond to N beam directions. The terminal device may receive the TRS by using a plurality of beams. The terminal device separately receives the K of the N TRSs on one beam (denoted as a beam #1), to complete one time of sweeping of a transmit beam. The K TRSs may be some of the N TRSs, or may be all of the N TRSs. This is not particularly limited in this application. A process of determining the K TRSs is described in detail below. In this embodiment of this application, a plurality of TRSs used by the terminal device to complete one time of sweeping of a transmit beam of the network device are referred to as a TRS burst set.

In addition to related information about the N time-frequency resources, the first configuration information may further include related information about the TRS burst set. For example, the first configuration information may further indicate effective time of the TRS burst set. To be specific, the first configuration information may further indicate a time range from a moment at which the UE starts to receive the TRSs to a moment at which the UE ends receiving of the TRSs. In other words, the first configuration information may further indicate a start time domain position of a TRS with a foremost time domain position in the K TRSs, and an end time domain position of a TRS with a rearmost time domain position in the K TRS. The first configuration information may further indicate at least one of a quantity of TRSs included in the TRS burst set, a time gap between two TRS bursts that are adjacent in time domain in the TRS burst set, and a sending periodicity of the TRS burst set.

In conclusion, in this embodiment of this application, in a case, a TRS burst set includes N TRS bursts. In this case, the first configuration information includes information about time-frequency resources corresponding to the N TRS bursts.

In another case, a TRS burst set includes K of N TRS bursts. In this case, in an implementation, the first configuration information includes information about time-frequency resources corresponding to the N TRS bursts, and the first configuration information includes related information about the TRS burst set (or the K TRS bursts). In another implementation, the first configuration information includes information about time-frequency resources corresponding to the N TRS bursts, and indicates a related configuration of the TRS burst set (or the K TRS bursts) by using other information or signaling (for example, the following first activation information).

To be specific, the first configuration information sent by the network device to the terminal device may include but is not limited to at least one of the following information: a start time domain position of a TRS burst with a foremost time domain position in the N TRS bursts, start frequency domain positions of the N TRSs, an offset (offset) of the TRS burst with the foremost time domain position in the N TRS bursts relative to the reference moment, a quantity of TRS bursts in the TRS burst set in time domain, a gap between two adjacent TRS bursts in the TRS burst set in time domain, a sending periodicity of the TRS burst set, effective time of the TRS burst set, a TRS resource identifier, a TRS resource index, and QCL information. The time-frequency resources used for transmitting the N TRSs may be determined based on the information.

In a possible implementation, each of the N TRSs includes a PSS and an SSS, and a first symbol used for carrying the PSS and a second symbol used for carrying the SSS are in a same slot. One slot includes 14 symbols in total. Further, the first symbol and the second symbol are two consecutive symbols, and the second symbol may be located after the first symbol, or may be located before the first symbol.

It should be noted that, in this embodiment of this application, a time domain symbol may be an orthogonal frequency division multiplexing (orthogonal frequency division multiplexing, OFDM) symbol, a discrete Fourier transform-spread-OFDM (discrete Fourier transform-spread-OFDM, DFT-s-OFDM) symbol, or the like. Unless otherwise specified, all symbols in this embodiment of this application are time domain symbols.

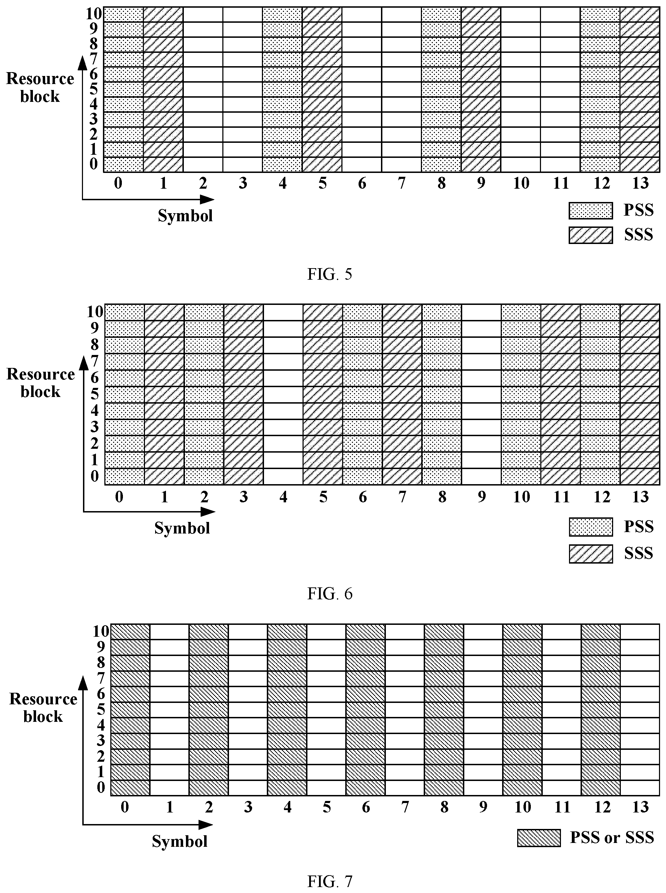

Possible positions of the N time-frequency resources that carry the N TRS bursts may be referred to as a TRS burst pattern. FIG. 5 shows an example of the TRS burst pattern. For a 1^{st} TRS burst, a PSS occupies a 1^{st} symbol in a slot in which the 1^{st} TRS burst is located, and occupies 11 resource blocks (resource block, RB) in frequency domain in which the 1^{st} TRS burst is located, and an SSS occupies a 2^{nd} symbol in a slot in which the 1^{st} TRS burst is located, and occupies 11 RBs in frequency domain in which the 1^{st} TRS burst is located. Therefore, a time-frequency resource corresponding to the 1^{st} TRS burst is two consecutive symbols in time domain, and is 11 RBs in frequency domain.

It should be noted that, in this embodiment of this application, quantities of RBs occupied by the PSS and the SSS that form the TRS are not limited. For example, the PSS and the SSS may occupy 5 RBs, 15 RBs, or 20 RBs. The following mainly describes a TRS time-frequency resource configuration condition.

For example, all TRS bursts in FIG. 5 each occupy two consecutive symbols in the slot, occupy 11 RBs in frequency domain, and there is a first time gap of two symbols between time-frequency resources corresponding to any two TRS bursts that are adjacent in time domain. Therefore, after a time domain position corresponding to the 1^{st} TRS burst is determined, a time domain position of another TRS burst in the TRS burst set may be correspondingly determined. When first time gaps between time-frequency resources corresponding to any two TRS bursts that are adjacent in time domain are equal, configured time-frequency resources are periodic. In the slot shown in FIG. 5, a plurality of TRS bursts are carried on 0^{th} and 1^{st} symbols, 4^{th} and 5^{th} symbols, 8^{th} and 9^{th} symbols, and 12^{th} and 13^{th} symbols in the slot in which the plurality of TRS bursts are located. It should be understood that the foregoing enumerated case in which the first time gaps between time-frequency resources corresponding to any two TRS bursts that are adjacent in time domain are equal is merely an example for description. This is not limited in this application. There are N-1 groups of TRS bursts that are adjacent in time domain in the N TRS bursts, in other words, there are N-1 first time gaps. In a possible case, the N-1 first time gaps may be different from each other. In another possible case, some of the N-1 first time gaps are the same, and the remaining first time gaps are different from each other.

A symbol that is not occupied by the TRS in the slot may be configured for another related signal used for measurement.

In a possible implementation, after sending the TRS burst in a beam direction, the network device needs specific time to switch to a next beam direction to send a next TRS burst. Adaption to this scenario may be implemented through configuration of the first time gap.

Further, a time gap between any two time-frequency resources that are adjacent in time domain in time-frequency resources used for carrying an SSB is referred to as a second time gap. There are N-1 groups of SSB bursts that are adjacent in time domain in the N SSB bursts, in other words, there are N-1 second time gaps. In a possible case, the N-1 second time gaps may be the same as or different from each other. In another possible case, some of the N-1 second time gaps are the same, and the remaining second time gaps are different from each other.

In a possible implementation, each of a plurality of first time gaps is shorter than any second time gap. In another possible implementation, some of the N-1 first time gaps are longer than some of the second time gaps, and the other first time gaps are shorter than the other second time gaps.

To be specific, a largest time gap between any two time-frequency resources that are adjacent in time domain in the N time-frequency resources is a first time gap, a largest time gap between any two time-frequency resources that are adjacent in time domain in a plurality of time-frequency resources used for carrying an SSB is a second time gap, and the first time gap is shorter than the second time gap.

In other words, the N time-frequency resources include at least one first time-frequency resource pair, where the first time-frequency resource pair includes two time-frequency resources that are adjacent in time domain, and there is a first time gap between the two time-frequency resources in the first time-frequency resource pair; and the plurality of time-frequency resources used for carrying the SSB include at least one second time-frequency resource pair, where the second time-frequency resource pair includes two time-frequency resources that are adjacent in time domain, and there is a second time gap between the two time-frequency resources in the second time-frequency resource pair. The first time gap is shorter than the second time gap. In a possible implementation, any one of the N-1 first time gaps may be shorter than any one of a plurality of second time gaps. Alternatively, at least one of the N-1 first time gaps may be shorter than at least one of a plurality of second time gaps.

For example, when a high-frequency SCell is activated, the second time gap may be configured as 4 symbols, 8 symbols, 16 symbols, or the like, and the first time gap in this embodiment of this application may be configured as 1 symbol, 2 symbols, or the like.

In addition, to improve quality of a received signal, an optimal beam needs to be determined from a plurality of beams. Therefore, a plurality of beams in different directions need to be configured to complete activation of the second cell. When the N time-frequency resources are configured, a value of N is less than or equal to a maximum quantity of beams supported by the second cell. Currently, the maximum quantity of beams supported by the second cell as a high-frequency cell is usually 64. In this case, the value of N is set to 64, to be specific, 64 time-frequency resources may be configured to carry 64 TRS bursts, so that a requirement of beam sweeping performed for activating the second cell can be met. It should be understood that, in this embodiment of this application, the maximum quantity of beams supported by the second cell may alternatively not be equal to 64. This is not limited in this application.

Generally, one TRS burst may correspond to measurement in one beam direction. Therefore, in the pattern shown in FIG. 5, four TRS bursts may be configured in one slot, and a time-frequency resource of one TRS burst set may be configured as 16 such patterns, so that beam alignment in 64 directions of the second cell can be met. It should be understood that a TRS burst may be in one-to-one correspondence with a beam direction, or a plurality of TRS bursts may correspond to one beam direction, or one TRS burst may correspond to a plurality of beam directions. This is not limited in this application.

As shown above, in this application, time occupied by a TRS burst set is related to symbols occupied by TRS bursts, a gap between TRS bursts, and a quantity of TRS bursts. In addition, a gap between TRS bursts is measured in slots. Therefore, time occupied by a TRS burst set may be calculated in slots. For example, when a subcarrier spacing is configured as 120 kHz, a length of each slot is 0.125 ms. Therefore, in the scenario shown in FIG. 5, one TRS burst set occupies 2 ms. When the subcarrier spacing is configured as 240 kHz, each slot corresponds to 0.0625 ms. Therefore, one TRS burst set occupies 1 ms in this scenario.

It should be understood that the foregoing TRS burst pattern is merely an example, and the network device may configure a plurality of TRS burst patterns based on an operating frequency band of a system, the subcarrier spacing, and the like.

FIG. 6 shows another example of the TRS burst pattern. In a slot, a 1^{st} TRS burst (to be specific, a TRS burst with a foremost time domain position) in six TRS bursts is configured on a symbol #0 and a symbol #1 in the slot, a 2^{nd} TRS burst is configured on a symbol #2 and a symbol #3 in the slot, and a 3^{rd} TRS burst is configured on a symbol #5 and a symbol #6 in the slot, a 4^{th} TRS burst is configured on a symbol #7 and a symbol #8 in the slot, a 5^{th} TRS burst is configured on a symbol #10 and a symbol #11 in the slot, and a 6^{th} TRS burst (to be specific, a TRS burst with a rearmost time domain position) is configured on a symbol #12 and a symbol #13 in the slot. There is no first time gap between the 1^{st} TRS burst and the 2^{nd} TRS burst in time domain. Similarly, there is no first time gap between the 3^{rd} TRS burst and the 4^{th} TRS burst, and between the 5^{th} TRS burst and the 6^{th} TRS burst in time domain. There is a first time gap of one symbol between the 2^{nd} TRS burst and the 3^{rd} TRS burst in time domain. Similarly, there is a first time gap of one symbol between the 4^{th} TRS burst and the 5^{th} TRS burst in time domain. In this case, first time gaps between time-frequency resources corresponding to any two TRS bursts that are adjacent in time domain are not all equal. In other words, the configured TRS time-frequency resources are aperiodic.

When TRSs are in one-to-one correspondence with beam directions, to meet beam sweeping in 64 directions of the second cell, time-frequency resources may be configured for one TRS burst set based on 11 such patterns. When two TRSs correspond to one beam direction, to satisfy beam sweeping in 64 directions of the second cell, time-frequency resources may be configured for one TRS burst set based on 22 such patterns.

In another possible implementation, for example, there may be no first time gap between time-frequency resources corresponding to any two TRS bursts that are adjacent in time domain. In this case, a maximum of seven TRS bursts may be configured in one slot. A specific configuration manner is not described herein.

It should be understood that the foregoing several patterns are merely examples. In this embodiment of this application, the 1^{st} TRS burst may alternatively be distributed on another symbol in a slot in which the 1^{st} TRS burst is located. For example, a start time domain position corresponding to the 1^{st} TRS burst may start from a 2^{nd} symbol or a 3^{rd} symbol in the slot in which the 1^{st} TRS burst is located.

It should be further understood that the first time gap between time-frequency resources carrying two adjacent TRS bursts may be set to any quantity of symbols such as one symbol, two symbols, or three symbols, or the first time gap may be a time domain unit such as one slot or one subframe, or the first time gap is set to 0 symbols, in other words, time-frequency resources corresponding to the two adjacent TRS bursts are consecutive in time domain.

It can be learned that in this embodiment of this application, a composition structure and a resource mapping position of a TRS burst are designed, so that a time-frequency resource can be more efficiently used, thereby shortening time for transmitting a TRS burst set in an activation process.

Currently, for activation based on a cell-specific SSB, cell search needs to be performed via both the PSS and the SSS to obtain a physical cell identifier (physical cell ID, PCI) number. In comparison, in this embodiment of this application, cell activation is performed based on the UE-specific TRS. Therefore, a PCI does not need to be obtained. In this case, symbol synchronization can be obtained via only the PSS signal or the SSS signal. Therefore, in a possible implementation, the UE-specific TRS may include only the PSS. In another possible implementation, the UE-specific TRS may include only the SSS.

As shown in FIG. 7, when a TRS includes only a PSS or an SSS, one TRS burst occupies one symbol in time domain, and may occupy resources of 11 RBs in frequency domain. FIG. 7 shows a first time gap of one symbol is configured between TRSs, a 1^{st} TRS is located on a 1^{st} symbol of a slot in which the 1^{st} TRS is located, and seven TRSs are configured in one slot.

It should be understood that a start position of the TRS, a quantity of occupied RBs, the first time gap on a time-frequency resource, a subcarrier spacing, and the like may be independently configured or predefined by the network device based on an actual scenario. This is not limited in this application. In a design in which one TRS occupies one symbol, system overheads and the activation delay can be further reduced.

In still another possible implementation, the TRS may further include a PBCH. Similarly, a set including the PSS, the SSS, and the PBCH may be referred to as a TRS burst. In this design, the PSS is carried on the first symbol, the SSS is carried on a second symbol, and the PBCH is carried on a third symbol and a fourth symbol. The first symbol, the second symbol, the third symbol, and the fourth symbol are symbols in a same slot. Further, the first symbol, the second symbol, the third symbol, and the fourth symbol are consecutive in time domain. Further, the third symbol is located after the first symbol, and the fourth symbol is located after the second symbol.

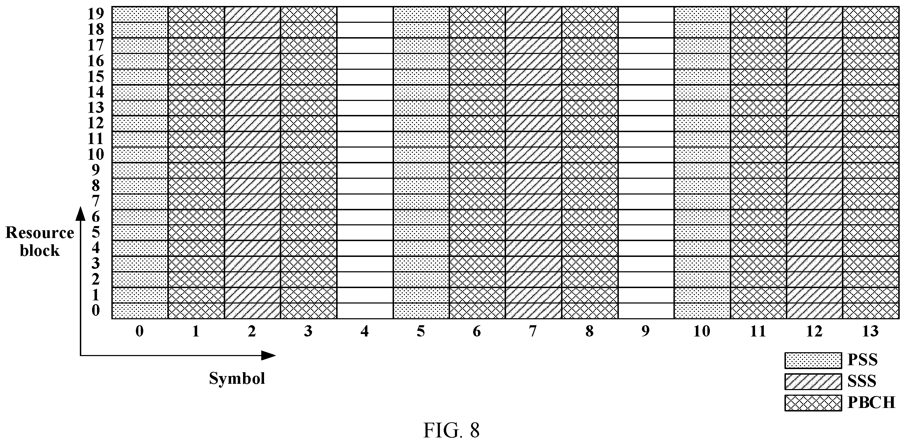

As shown in FIG. 8, a TRS burst includes a PSS, an SSS, and a PBCH. The PSS in a 1^{st} TRS burst is carried on a 1^{st} symbol in a slot in which the 1^{st} TRS burst is located, the SSS is carried on a 3^{rd} symbol, the PBCH is carried on a 2^{nd} symbol and a 4^{th} symbol, and the PSS, the SSS, and the PBCH each are configured to occupy 20 RBs in frequency domain. It should be understood that quantities of RBs occupied by the PSS, the SSS, and the PBCH in frequency domain are not limited in this application.

Further, four symbols are configured for each TRS burst in time domain, 20 RBs are configured for each TRS burst in frequency domain, and a maximum of three TRS bursts may be configured in one slot. In addition, when a maximum quantity of beam directions of the second cell is 64, to reliably determine an optimal beam, one TRS burst set may be configured in 22 slots, and a maximum of 66 TRS bursts may be carried in the 22 slots.

When a subcarrier spacing in FIG. 8 is 120 kHz, each slot corresponds to 0.125 ms, and one TRS burst set occupies time about 2.75 ms. When the subcarrier spacing is 240 kHz, each slot corresponds to 0.0625 ms, and one TRS burst set occupies time about 1.375 ms.

In the foregoing scenario, a position relationship between time-frequency resources carrying a plurality of TRS bursts may also be independently configured or predefined by the network device based on an actual scenario. For example, as shown in FIG. 8, the network device may predefine that a TRS burst with a foremost time domain position in each slot is distributed on 0^{th} to 3^{rd} symbols in the slot, and there is a first time gap of one symbol between time-frequency resources corresponding to any two adjacent TRSs in the slot. Therefore, in the slot, a 2^{nd} TRS burst is carried on 5^{th} to 8^{th} symbols, and a 3^{rd} TRS burst is carried on 10^{th} to 13^{th} symbols.

It should be understood that the foregoing several patterns are merely examples. For example, another subcarrier spacing may be configured for the TRS burst pattern, and the TRS burst may be further carried at another position in one slot. In addition, time domain positions of TRS bursts in a plurality of slots may be the same or may be different. This is not limited in this application.

It can be learned from the above that the TRS designed in this application may include the PSS and/or the SSS, or include the PSS, the SSS, and the PBCH. In addition, a plurality of time-frequency resources are configured to carry a plurality of TRSs in one TRS burst set, to satisfy beam sweeping in a plurality of directions. It can be learned that in this embodiment of this application, the composition structure of the TRS burst and the corresponding time-frequency resource are designed, so that system overheads and the delay of activating the secondary cell can be reduced.

It should be understood that the TRS burst illustrated in the foregoing pattern is a candidate TRS burst configured by the network device. However, a quantity of actually sent TRS bursts and time-frequency resource locations corresponding to the actually sent TRS bursts may be selected based on different scenarios. For example, one time of sweeping may be completed by using 32 TRS bursts.

In a possible implementation, the terminal device may complete one time of beam sweeping by using the K of the N TRSs indicated by the first configuration information. That is, one TRS burst set includes K TRS bursts. A value of K may be less than N, or a value of K may be equal to N. In this case, before the terminal device receives the K of the N TRSs on the K of the N time-frequency resources, the method 400 may further include S420. To be specific, the network device may send the first activation information to the terminal device. The terminal device receives the first activation information from the network device. The first activation information may indicate to activate the second cell. The first activation information may be carried on a MAC CE or downlink control information (downlink control information, DCI). For example, the MAC CE may include an identifier indicating whether to activate a cell, and each cell may correspond to one identifier. When the identifier is 1, it indicates to activate the cell, and when the identifier is 0, it indicates to deactivate the cell.

There is a third time gap Y between a time-frequency resource used for carrying the TRS with the foremost time domain position in the K TRSs and a time-frequency resource used for carrying the first activation information, and Y may be configured by using signaling or predefined in a protocol. For example, a time domain length corresponding to Y may be predefined in the protocol, or the network device configures the time domain length for the terminal device by using the RRC signaling or the MAC CE.

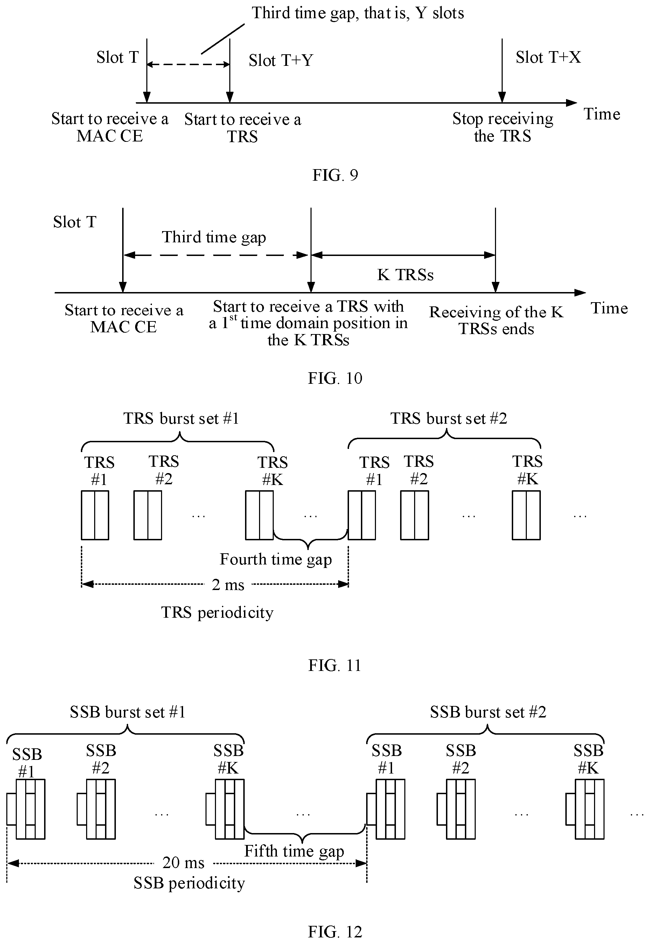

As shown in FIG. 9, the network device starts to send the first activation information at a slot T, and after Y, the network device starts to send the TRS with the foremost time domain position in the K TRSs. In other words, the time-frequency resource carrying the TRS with the foremost time domain position in the K TRSs is a time-frequency resource that corresponds to a moment after Y from the slot T and that is in the N time-frequency resources indicated by the first configuration information.

Correspondingly, when the starting to receive the first activation information at the slot T, the terminal device may calculate, based on a moment of starting to receive the first activation information and the third time gap Y, a moment of receiving the TRS with the foremost time domain position in the K TRSs, or a time domain position of the time-frequency resource used for carrying the TRS with the foremost time domain position in the K TRSs.

After a period of time (that is, an example of the first duration, for example, X slots), at a slot T+X, the network device stops sending the TRS, and the terminal device stops receiving the TRS. In other words, sending or receiving of the K TRSs may be completed at the slot T+X or before the slot T+X. In this case, duration from starting of receiving the first activation information to completion of receiving the TRS with the rearmost time domain position in the K TRSs is X slots. Duration from starting of sending the first activation information to completion of sending the TRS with the rearmost time domain position in the K TRSs is also X slots.

X may be configured by using signaling or predefined in a protocol. For example, X may be configured by using RRC, or may be indicated by using MAC CE signaling, or may be indicated by feedback information sent by the terminal device to the network device. In addition, duration corresponding to a value of X may be configured based on different scenarios of a specific terminal device. For example, X may be set to 1 ms, 2 ms, 3 ms, 5 ms, or 10 ms. This is not limited in this application.

In this application, the network device may perform configuration, so that the value of X may be less than V A value of V corresponds to time from starting of receiving second activation information by a terminal device to completion of receiving an SSB with a rearmost time domain position in N SSBs (that is, an example of second duration, for example, V slots). The second activation information is activation information received when the second cell is activated via the N SSBs. In other words, the value of V corresponds to time from starting of sending the second activation information to completion of sending an SSB with a rearmost time domain position in K SSBs, and the second activation information is activation information sent when the second cell is activated via the N SSBs.

It should be understood that the foregoing enumerated activation process (in other words, the TRS transmission process) of the second cell triggered by using the first activation information is merely an example for description. This application is not limited thereto. When the terminal device receives the first configuration information and learns of the time-frequency resources corresponding to the N TRSs, a TRS receiving process may be triggered based on an actual requirement (for example, user indication or condition triggering) or the like.

In this embodiment of this application, the K TRSs may be all of the N TRSs. Alternatively, the K TRSs may be some of the N TRSs.

In a possible implementation, during the slot T to the slot T+X, the K TRSs may be periodically sent. To be specific, first time gaps between any two time-frequency resources that are adjacent in time domain used for carrying the TRSs are equal. In another possible implementation, during the slot T to the slot T+X, the TRS may alternatively be sent aperiodically. To be specific, first time gaps between any two time-frequency resources that are adjacent in time domain used for carrying the TRSs are not all equal.

The following describes in detail a manner in which the terminal device determines the K TRSs when the K TRSs may be some of the N TRSs.

In a possible implementation, the method 400 may further include step S430. To be specific, the network device sends first indication information to the terminal device, where the first indication information indicates the K of the N TRSs. Sending of the TRS may be indicated by using a corresponding identifier TRS ID. In a possible implementation, the first indication information may be MAC CE signaling, RRC signaling, or physical layer signaling.

Specifically, the first indication information may include an identifier #A, and the identifier #A may indicate identifiers of K of the N TRSs that need to be received by the terminal device. Because the first configuration information indicates a one-to-one mapping relationship between identifiers of the N TRSs and the N time-frequency resources, the terminal device can determine, based on the first configuration information, a time-frequency resource corresponding to the identifier #A, so that transmission of the K TRSs can be performed on the time-frequency resource. By way of example and not limitation, the identifier #A may be implemented in a form of a bitmap (bitmap). For example, the identifier #A may include N bits, the N bits are in one-to-one correspondence with the N TRSs indicated by the first configuration information, and a value of each bit indicates whether the terminal device needs to receive a TRS corresponding to the bit. It may also be understood as that the bitmap indicates the K of the N TRSs.

For example, in a case in which the network device provides a plurality of high-frequency secondary cells, in a possible implementation, the first indication information may further include an identifier #B, and the identifier #B indicates the second cell. Therefore, the terminal device can determine, based on the identifier #B, to use the K TRSs when activating the second cell. By way of example and not limitation, the identifier #B may be implemented in a form of a bitmap. For example, the identifier #B may include a plurality of bits, the plurality of bits are in one-to-one correspondence with a plurality of cells, and a value of each bit indicates whether a cell corresponding to the bit needs to be activated.

In another possible implementation, the first indication information may further include an identifier #C, and the identifier #C indicates a specific value of K. In other words, the terminal device can determine, based on the identifier #C, a quantity of TRSs that need to be received and that is in the N TRSs. It should be noted that the specific value of K may also be indirectly determined by using the identifier #A. In this case, the first indication information may not need to carry the identifier #C.

In a possible implementation, the first indication information and the first activation information are carried in same signaling. As shown in FIG. 10, the first indication information and the first activation information are carried in same MAC CE signaling. In this case, step 420 and step S430 are combined into one step. In this case, the MAC CE signaling may indicate the terminal device to activate the second cell, and indicate sending of the K TRSs in the cell.

The network device sends the MAC CE at the slot T, and sends the K TRSs after the third time gap. In addition, the terminal device receives the first activation information, and starts to receive the TRSs after the third time gap (for example, Y slots). A time domain length corresponding to the third time gap may be predefined in a protocol, or may be configured by using RRC, or may be indicated by the first indication information. In the third time gap, the terminal device may prepare for receiving the TRSs, so that reliability and accuracy of the communication technologies provided in this application can be improved.

As shown in FIG. 11, in a possible implementation, the K TRSs, to be specific, a TRS #1, a TRS #2, ..., and a TRS #K, are used for completing one time of beam sweeping, and the TRS #1, the TRS #2, ..., and the TRS #K form a TRS burst set. The K TRSs belong to one of a plurality of TRS burst sets. For example, the terminal device has eight receive beams. For each receive beam, the terminal device needs to perform one time of beam sweeping on a transmit beam of the network device, in other words, needs to receive the K TRSs in one TRS burst set, to determine an optimal transmit beam when the receive beam is used for receiving the TRS. To further determine an optimal receive beam of the terminal device, the terminal device needs to sequentially use the eight receive beams to sweep the transmit beam of the network device, in other words, needs to receive 8*K TRSs in eight TRS burst sets in total. The eight TRS burst sets are sequentially a TRS burst set #1 to a TRS burst set #8.

As shown in FIG. 11, there is a fourth time gap between two TRS burst sets that are adjacent in time domain. For example, there is a fourth time gap between the TRS burst set #1 and the TRS burst set #2. In comparison, as shown in FIG. 12, a fifth time gap is a time gap between two SSB burst sets that are adjacent in time domain in a plurality of SSB burst sets. For example, there is a fifth time gap between an SSB burst set #1 and an SSB burst set #2. The fourth time gap is shorter than the fifth time gap in this embodiment of this application. This is because a dedicated time-frequency resource is configured for the terminal device to transmit the TRS in this application, so that a relatively short fourth time gap can be configured.

In this embodiment of this application, a time gap length between start time domain positions of two TRS burst sets that are adjacent in time domain is referred to as a TRS periodicity. Currently, all SSBs in one SSB burst set need to be sent in a same half-frame (5 ms). In other words, the network device needs to complete sweeping of an entire cell within 5 ms. However, an SSB periodicity is generally not equal to 5 ms. During initial cell search, the terminal device searches for the SSB based on a default periodicity of 20 ms. In this embodiment of this application, a configured TRS periodicity is less than the SSB periodicity, so that time needed for a plurality of times of beam sweeping is shortened, and the activation delay is further reduced.

The TRS periodicity is usually configured in a unit of a time domain unit. The time domain unit may be a millisecond (ms), a slot, a mini-slot, a frame, a subframe, or the like. For example, the TRS periodicity may be configured as 10 slots, 16 slots, one subframe, or the like. Based on different subcarrier spacings, one slot corresponds different periods of time, so that the TRS periodicity may be configured as 1 ms, 2 ms, 3 ms, 4 ms, 5 ms, 10 ms, 15 ms, or the like. This is not limited in this application.

It can be learned that in this application, a short TRS periodicity may be configured for a specific terminal device, to reduce time for which the terminal device waits to receive a TRS in an activation process. This reduces a delay in the activation procedure, and helps improve user experience.

In a possible implementation, the TRS periodicity in this application may be configured as 2 ms. In the activation process, the terminal device needs to perform one time of cell search, two times of AGC, and one time of L1 measurement. Therefore, four times of TRS measurement need to be performed in total in the entire process. Considering that the terminal device has a maximum of eight beams, and for each beam, all TRS beams of the network device need to be measured, one time of TRS measurement includes eight TRS periodicities in total. Therefore, the entire activation procedure includes 32 TRS periodicities, and a total delay is about 64 ms. It can be learned that, compared with conventional technologies, using a UE-specific TRS can implement more efficient cell search and beam sweeping.

In a possible implementation, in a process in which the terminal device performs AGC or time-frequency synchronization by using the TRS, the terminal device may obtain L1-reference signal received power (reference signal received power, RSRP) information by using the TRS at the same time, so that a procedure of separately performing one time of L1-RSRP measurement can be avoided, and delay overheads in the activation procedure are further reduced.

By way of example and not limitation, in this application, after the UE-specific TRS is introduced for SCell activation, a specific SCell activation delay T satisfies the following formula:
T=W+TTRS_MAX+n·TTRS_MAX+TL1-RSRP, measure+TL1-RSRP, report+max {(THARQ+Tuncertainty_MAC+Z+TFineTiming), (Tuncertainty_RRC+TRRC_delay)}.

W represents time for processing activation information (for example, a MAC CE) by the terminal device. For example, a value of W may be 3 milliseconds (ms), TTRS_MAX represents a TRS periodicity, n is a quantity of TRS periodicities in an SCell activation process, and Z is a preset constant. For example, a value of Z may be 5 ms. TL1-RSRP, measure is an L1-RSRP measurement delay. For parameter descriptions of TL1-RSRP, report, TFineTiming and TRRC_delay, refer to related descriptions in Section 8.3.2 of 3GPP TS 38.133 V17.7.0.

Because the TRS periodicity in this application is significantly shorter than an SSB periodicity specified in 3GPP TS 38.133 V17.7.0, a delay in a high-frequency SCell activation procedure can be effectively reduced.

It can be learned that this embodiment of this application provides a UE-specific TRS configuration manner. The SSB with a long periodicity is replaced by periodically or aperiodically sending the TRS, so that the cell activation delay can be reduced.

In a possible implementation, in this embodiment of this application, L1-RSRP information may be further obtained by using the TRS. Further, the L1-RSRP information may be obtained based on the TRS in a process of performing AGC and/or time-frequency synchronization, so that a process of separately performing an L1-RSRP measurement can be avoided, and a delay in a high-frequency SCell activation procedure can be further reduced.

As described above, the K TRSs used for activating the second cell (or the K TRSs that need to be received by the terminal device) may be some of the N TRSs. The following describes in detail a specific process in which the network device determines the K TRSs.

For example, in a high-frequency SCell activation procedure, known low-frequency cell information may be used to assist in predicting a transmit beam and/or a receive beam of a high-frequency cell, thereby reducing a delay in the cell activation procedure. It should be noted that the prediction method may also be used in a scenario in which beam sweeping is performed via an SSB or another signal. This is not limited in this application.

Specifically, a beam set used by the second cell usually includes a plurality of beams (for example, N beams). The network device may predict the N beams, to determine a beam set from which an optimal beam may come (denoted as a beam set #a). The beam set #a is a subset of the beam set including the N beams. For example, the beam set #a includes beams corresponding to the K TRSs.

In this application, the foregoing prediction may be performed in the following Manner 1 and Manner 2.

### Manner 1

High frequency and low frequency channels are correlated in terms of a sub-path level feature. Therefore, in a possible implementation, a sending device may perform the foregoing prediction by extracting a sub-path feature of a low-frequency cell.

A specific prediction process is to perform deduction based on a quasi co-location (quasi co-location, QCL) relationship between a signal of a known cell and a signal of a to be activated cell (that is, the second cell). If a channel feature acting on an antenna port may be deduced from another antenna port, it is considered that the two ports are QCL-ed.

A QCL relationship between signals may be configured by using RRC signaling. The QCL relationship may include four types: QCL-TypeA, QCL-TypeB, QCL-TypeC, and QCL-TypeD. A feature and a function of each type are shown in Table 1.

**Table 1**

| Type | Feature | Function |
|---|---|---|
| QCL-TypeA | Doppler shift, Doppler spread, average delay, and delay spread | Obtaining channel estimation information |
| QCL-TypeB | Doppler shift and Doppler spread | Obtaining channel estimation information |
| QCL-TypeC | Doppler shift and average delay | Obtaining measurement information such as an RSRP |
| QCL-TypeD | Spatial Rx parameter | Assisting in beamforming of the terminal device |

A signal having a QCL relationship with the TRS may include but is not limited to an SSB or another RS.

### Manner 2

The network device may predict the beam set #a in advance by using historical information of a high-frequency cell (that is, an example of the second cell). For example, if the terminal device has accessed the second cell, the network device may add, to the beam set #a, a beam determined by the terminal device in a historical record through beam sweeping. For another example, if a terminal device near the terminal device has accessed the second cell, the network device may add, to the beam set #a, a beam determined by the terminal device near the terminal device through beam sweeping.

After prediction, a quantity of beams in a transmit beam set may be reduced from N to K in a predicted transmit beam set. As described above, in this embodiment of this application, there is a correspondence between a plurality of beams used by the network device (or the second cell) and a plurality of TRSs. Therefore, TRSs corresponding to the K beams may be determined as the K TRSs that need to be received by the terminal device.

It should be understood that the foregoing prediction process may occur before the network device configures the N TRS time-frequency resources for the terminal device. In this case, the K TRS time-frequency resources may be directly configured based on a prediction result, to carry the K TRSs. The foregoing prediction process may alternatively occur after the network device configures the N TRS time-frequency resources for the terminal device. In this case, the corresponding K TRSs may be sent on the K of the N time-frequency resources based on a prediction result, to complete beam sweeping on a predicted candidate beam.

It is assumed that the transmit beam set corresponding to the second cell has 16 beams in total, which are respectively numbered as beam ID=0, beam ID=1, beam ID=2, ..., and beam ID=15. For example, beams in a transmit beam set obtained through the foregoing prediction are beam ID=3, beam ID=6, and beam ID=10. In this case, the network device may send the TRS in the three directions, and the terminal device may traverse and measure beams in the three directions to complete an activation process. A quantity of UE-specific TRS bursts to be sent may be determined based on the transmit beam set obtained through the prediction. In this case, the terminal device needs to configure only three UE-specific TRS bursts to complete one TRS beam sweeping. After the prediction, the quantity of UE-specific TRS bursts that need to be configured and resource information for configuring the UE-specific TRS may be delivered to the terminal device by using RRC signaling or MAC CE signaling.

It may be understood that, to implement the functions in the foregoing embodiments of this application, the network device and the terminal device include corresponding hardware structures and/or software modules for performing the functions. A person skilled in the art is to be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

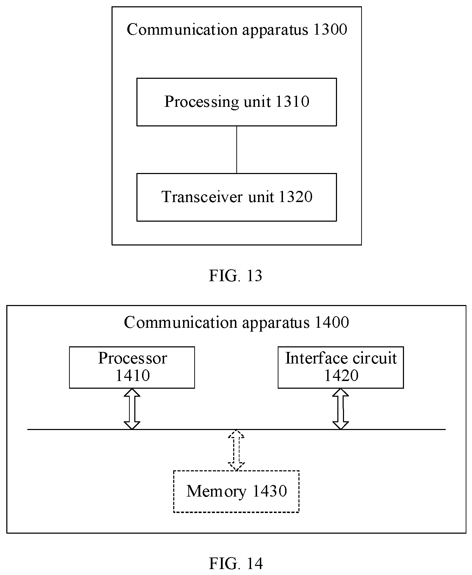

FIG. 13 and FIG. 14 are diagrams of structures of possible communication apparatuses according to embodiments of this application. The communication apparatuses may be configured to implement functions of the terminal device or the network device in the foregoing method embodiment, and therefore can also implement the beneficial effects in the foregoing method embodiment. In this embodiment of this application, the communication apparatus may be one of the terminal devices 120a to 120j shown in FIG. 1, or may be the network device 110a or 110b shown in FIG. 1, or may be a module (for example, a chip) used in a terminal device or a network device.

As shown in FIG. 13, the communication apparatus 1300 includes a processing unit 1310 and a transceiver unit 1320. The communication apparatus 1300 is configured to implement functions of the terminal device or the network device in the method embodiment shown in FIG. 4.

When the communication apparatus 1300 is configured to implement the functions of the terminal device in the method embodiment shown in FIG. 4, the transceiver unit 1320 is configured to receive first configuration information from a network device via a first cell, where the first configuration information indicates N time-frequency resources that are in one-to-one correspondence with N temporary reference signals TRSs, and the N time-frequency resources are respectively used for carrying the N TRSs. The transceiver unit 1320 is further configured to receive K of the N TRSs on K of the N time-frequency resources, where K and N are positive integers, and K≤N. The processing unit 1310 is configured to activate a second cell based on the K TRSs.

In some implementations, the transceiver unit 1320 is further configured to receive first indication information from the network device, where the first indication information indicates the K of the N TRSs. In other words, the first indication information may indicate the K TRSs triggered in the N configured TRSs.

When the communication apparatus 1300 is configured to implement the functions of the network device in the method embodiment shown in FIG. 4, the transceiver unit 1320 is configured to send first configuration information to a terminal device via a first cell, where the first configuration information indicates N time-frequency resources that are in one-to-one correspondence with N temporary reference signals TRSs, and the N time-frequency resources are respectively used for carrying the N TRSs. The transceiver unit 1320 is further configured to send K of the N TRSs on K of the N time-frequency resources, where K and N are positive integers, and K≤N. The processing unit 1310 is configured to generate the first configuration information and the TRS.

In a possible implementation, the transceiver unit 1320 is further configured to send first activation information to the terminal device, where the first activation information may indicate to activate the second cell.

In a possible implementation, the transceiver unit 1320 is further configured to send first indication information to the terminal device, where the first indication information indicates the K of the N TRSs.

It should be understood that a specific process in which the units perform the foregoing corresponding steps is described in detail in the foregoing method embodiments, and for brevity, details are not described herein.

As shown in FIG. 14, the communication apparatus 1400 includes a processor 1410 and an interface circuit 1420. The processor 1410 and the interface circuit 1420 are coupled to each other. It can be understood that the interface circuit 1420 may be a transceiver or an input/output interface. Optionally, the communication apparatus 1400 may further include a memory 1430, configured to: store instructions to be executed by the processor 1410, store input data required for running instructions by the processor 1410, or store data generated after the processor 1410 runs instructions.

When the communication apparatus 1400 is configured to implement the method shown in FIG. 4, the processor 1410 is configured to implement the functions of the processing unit 1310, and the interface circuit 1420 is configured to implement the functions of the transceiver unit 1320.

When the communication apparatus is a chip used in a terminal device, the chip in the terminal device implements the functions of the terminal device in the foregoing method embodiments. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

When the communication apparatus is a module used in a network device, the module in the network device implements functions of the network device in the foregoing method embodiments. The module in the network device receives information from another module (for example, a radio frequency module or an antenna) in the network device, where the information is sent by a terminal device to the network device. Alternatively, the module in the network device sends information to another module (for example, a radio frequency module or an antenna) in the network device, where the information is sent by the network device to a terminal device. The network device module herein may be a baseband chip of the network device, or may be a DU or another module. The DU herein may be a DU in an open radio access network (open radio access network, O-RAN) architecture.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

The method steps in embodiments of this application may be implemented in hardware, or may be implemented in software instructions that may be executed by the processor. The software instructions may include a corresponding software module. The software module may be stored in a random-access memory, a flash memory, a read-only memory, a programmable read-only memory, an erasable programmable read-only memory, an electrically erasable programmable read-only memory, a register, a hard disk drive, a removable hard disk drive, a read-only memory (read-only memory, ROM), or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a network device or a terminal device. Alternatively, the processor and the storage medium may exist in a network device or a terminal device as discrete components.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer programs or the instructions are loaded and executed on a computer, all or some of the procedures or functions in embodiments of this application are executed. The computer may be a general-purpose computer, a dedicated computer, a computer network device, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include both a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be understood that in this application, "at least one" means one or more; "a plurality of'" means two or more; and the term "and/or" describes an association relationship between associated objects, and represents that three relationships may exist. For example, A and/or B may represent the following cases: Only A exists, both A and B exist, and only B exists, where A and B may be singular or plural. In text descriptions of this application, the character "/" generally represents an "or" relationship between associated objects.

It should be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A cell activation method, performed by a terminal device or a module used in a terminal device, and comprising:
receiving first configuration information from a network device via a first cell, wherein the first configuration information indicates N time-frequency resources that are in one-to-one correspondence with N temporary reference signals TRSs, and the N time-frequency resources are respectively used for carrying the N TRSs;
receiving K of the N TRSs on K of the N time-frequency resources, wherein K and N are positive integers, and K≤N; and
activating a second cell based on the K TRSs.

2. The method according to claim 1, wherein the first configuration information is carried in radio resource control RRC signaling.

3. The method according to claim 1 or 2, wherein the method further comprises:
receiving first indication information from the network device, wherein the first indication information indicates the K of the N TRSs.

4. The method according to any one of claims 1 to 3, wherein the first cell is a primary cell of the terminal device, and the second cell is a secondary cell of the terminal device.

5. The method according to any one of claims 1 to 4, wherein a largest time gap between any two time-frequency resources that are adjacent in time domain in the N time-frequency resources is a first time gap, a largest time gap between any two time-frequency resources that are adjacent in time domain in a plurality of time-frequency resources used for carrying a synchronization signal and physical broadcast channel block SSB is a second time gap, and the first time gap is shorter than the second time gap.

6. The method according to any one of claims 1 to 5, wherein each of the N TRSs comprises a primary synchronization signal PSS and a secondary synchronization signal SSS, and a first symbol used for carrying the PSS and a second symbol used for carrying the SSS are in a same slot.

7. The method according to any one of claims 1 to 6, wherein there is a third time gap between a time-frequency resource used for carrying first activation information and a time-frequency resource used for carrying a TRS with a foremost time domain position in the K TRSs, the first activation information indicates to activate the second cell, and the third time gap is configured by using signaling, or the third time gap is predefined in a protocol.

8. The method according to any one of claims 1 to 7, wherein first duration is shorter than second duration, the first duration is duration from starting of receiving the first activation information to completion of receiving a TRS with a rearmost time domain position in the K TRSs, and the second duration is duration from starting of receiving second activation information to completion of receiving an SSB with a rearmost time domain position in the N SSBs, wherein the N SSBs are used for activating the second cell, and the first activation information and the second activation information indicate to activate the second cell.

9. The method according to any one of claims 1 to 8, wherein the K TRSs belong to one of a plurality of TRS burst sets, there is a fourth time gap between two TRS burst sets that are adjacent in time domain, the fourth time gap is shorter than a fifth time gap, and the fifth time gap is a time gap between two SSB burst sets that are adjacent in time domain in a plurality of SSB burst sets.

10. A cell activation method, performed by a network device or a module used in a network device, and comprising:
sending first configuration information via a first cell, wherein the first configuration information indicates N time-frequency resources that are in one-to-one correspondence with N temporary reference signals TRSs, and the N time-frequency resources are respectively used for carrying the N TRSs; and
sending K of the N TRSs on K of the N time-frequency resources, wherein the K TRSs are used for activating a second cell, K and N are positive integers, and K≤N.

11. The method according to claim 10, wherein the first configuration information is carried in radio resource control RRC signaling.

12. The method according to claim 10 or 11, wherein the method further comprises:
sending first indication information, wherein the first indication information indicates the K of the N TRSs.

13. The method according to any one of claims 10 to 12, wherein the first cell is a primary cell of a terminal device, and the second cell is a secondary cell of the terminal device.

14. The method according to any one of claims 10 to 13, wherein a largest time gap between any two time-frequency resources that are adjacent in time domain in the N time-frequency resources is a first time gap, a largest time gap between any two time-frequency resources that are adjacent in time domain in a plurality of time-frequency resources used for carrying a synchronization signal and physical broadcast channel block SSB is a second time gap, and the first time gap is shorter than the second time gap.

15. The method according to any one of claims 10 to 14, wherein each of the N TRSs comprises a primary synchronization signal PSS and a secondary synchronization signal SSS, and a first symbol used for carrying the PSS and a second symbol used for carrying the SSS are in a same slot.

16. The method according to any one of claims 10 to 15, wherein there is a third time gap between a time-frequency resource used for carrying first activation information and a time-frequency resource used for carrying a TRS with a foremost time domain position in the K TRSs, the first activation information indicates to activate the second cell, and the third time gap is configured by using signaling, or the third time gap is predefined in a protocol.

17. The method according to any one of claims 10 to 16, wherein first duration is shorter than second duration, the first duration is duration from starting of receiving the first activation information to completion of receiving a TRS with a rearmost time domain position in the K TRSs, and the second duration is duration from starting of receiving second activation information to completion of receiving an SSB with a rearmost time domain position in the N SSBs, wherein the N SSBs are used for activating the second cell, and the first activation information and the second activation information indicate to activate the second cell.

18. The method according to any one of claims 10 to 17, wherein the K TRSs belong to one of a plurality of TRS burst sets, there is a fourth time gap between two TRS burst sets that are adjacent in time domain, the fourth time gap is shorter than a fifth time gap, and the fifth time gap is a time gap between two SSB burst sets that are adjacent in time domain in a plurality of SSB burst sets.

19. A communication apparatus, comprising a processor and an interface circuit, wherein the interface circuit is configured to receive a signal from another communication apparatus and transmit the signal to the processor, or send a signal from the processor to another communication apparatus, and the processor is configured to implement the method according to any one of claims 1 to 9 or the method according to any one of claims 10 to 18 by using a logic circuit or by executing code instructions.

20. A computer-readable storage medium, wherein the storage medium stores a computer program or instructions, and when the computer program or the instructions are executed by a communication apparatus, the method according to any one of claims 1 to 9 is implemented, or the method according to any one of claims 10 to 18 is implemented.
